# EUROPEAN PATENT APPLICATION

(11) **EP 1 002 489 A1**
(43) Date of publication of application: **24.05.2000**
(21) Application number: 98830695.7
(22) Date of filing: 20.11.1998
(51) Int. Cl.: A47J 31/40, A47J 31/46

(54) **Automatic machine for preparing drinks**

(71) Applicant: POLTI S.p.A., 22070 Bulgarograsso (Como) (IT)
(72) Inventor: Polti, Franco, 22077 Olgiate Comasco - Como (IT); Pellegrini, Giovanni, 22090 Trezzano sul Naviglio - Milano (IT)
(74) Representative: Siniscalco, Fabio

(57) **Abstract**

An automatic machine (10) for preparing drinks from a soluble product and a liquid, these being mixed in a special chamber (29) in order to produce the drink, in which valve members (30, 55, 62) control the access of the measure of soluble product to the mixing chamber (29), the feeding of the liquid to the mixing chamber (29) and the emptying of the mixing chamber (29) to the exterior, which machine is fitted with a motor (31) rotating in a single direction of rotation and, for the control of the valve members (30, 55, 62), a control member (35, 59) operated by the motor (31) via mechanisms (76, 33, 34) that convert the rotary movement of the motor (31) into reciprocating movement of the control member (35, 59), in such a way that the control member (35, 59) opens and closes the valve members (30, 55, 62) by its movement. This drive means for the valve members is simple and reliable.

## Description

The present invention relates to an automatic machine for preparing drinks.

Machines for preparing hot drinks, in which a soluble product and a liquid are mixed and heated to produce the drink, are known.

These machines usually comprise essentially a device for metering out the soluble product, a device for supplying the liquid and a mixing chamber in which the soluble product and the liquid are mixed and heated so as to produce the drink which is then dispensed by the machine.

For its operation, the machine has a variety of valve members which control the access of the measure of soluble product to the mixing chamber, the feeding of the liquid to the mixing chamber, and the emptying of the mixing chamber.

In automatic machines it is extremely important that the means used to drive these valve members be simple so as to give the machine high reliability and low production costs.

The object of the present invention is to provide an automatic machine capable of satisfying these requirements.

This object is achieved in the form of an automatic machine for preparing drinks from a soluble product and a liquid, comprising means for metering out a predetermined quantity of soluble product, means for supplying the liquid, a mixing chamber connected to the metering means and to the supply means, in which the soluble product is mixed with the liquid to produce the drink, the said mixing chamber also being connected to the exterior so as to dispense the drink, and valve members for controlling the access of the measure of soluble product to the mixing chamber, the feeding of the liquid to the mixing chamber and the emptying of the mixing chamber, the machine being characterized in that it comprises a motor rotating in a single direction of rotation and, for the control of the valve members, a control member operated by the motor via means that convert the rotary movement of the motor into reciprocating movement of the control member, which control member opens and closes the valve members by its movement.

The invention will be understood more fully from the following description of an illustrative, non-restrictive embodiment thereof illustrated in the attached drawings in which:
Fig. 1 is a front perspective view of a machine according to the invention, in which its internal components are shown;
Fig. 2 is a rear perspective view of the machine shown in Fig. 1;
Fig. 3 is a view in vertical section of the main portion of the machine shown in Fig. 1; and
Figs. 4, 5, 6 and 7 show in sequence the operation of the machine shown in Fig. 1.

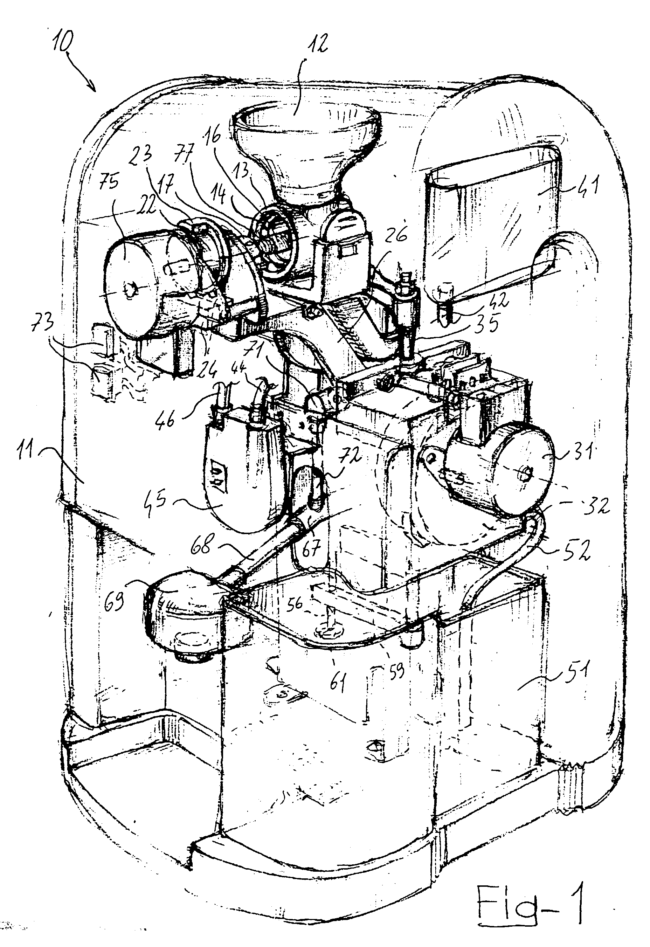

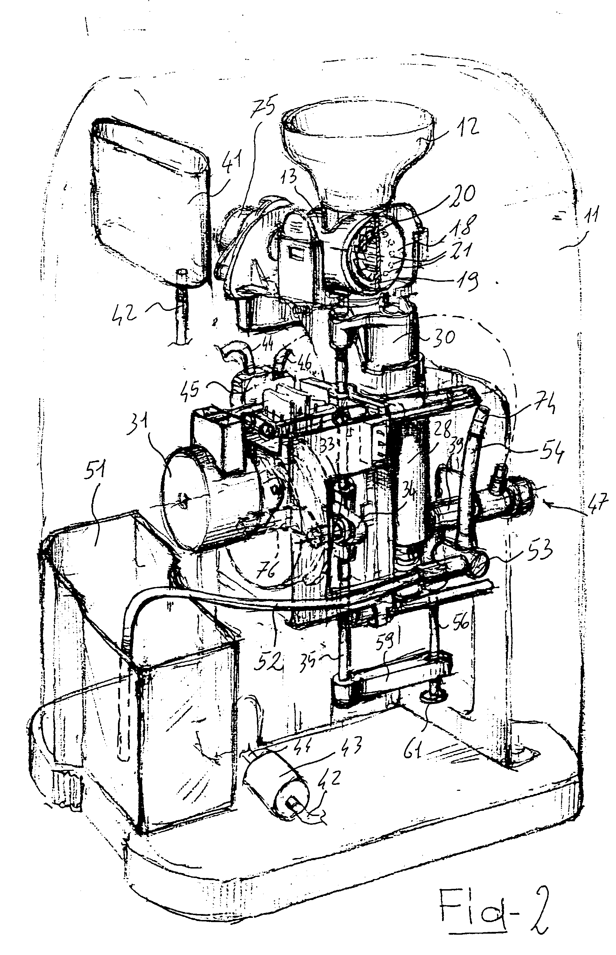

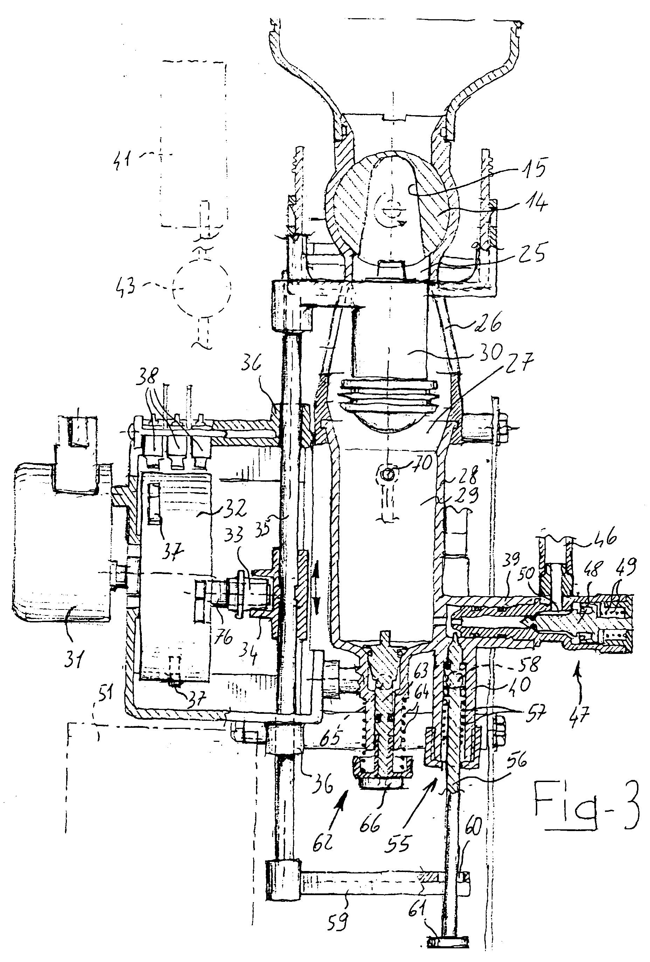

The machine shown in Figs. 1 and 2 and bearing the general reference 10, comprises a housing 11 illustrated as if transparent and not described in detail here, being unimportant for the purposes of the present invention. Arranged inside the housing is a series of mechanical and electrical components which will be described below with reference to Figs. 1, 2 and 3.

At the top of the machine 10 is an externally accessible hopper 12 designed to take a soluble product. The bottom of the hopper is in communication with a horizontal hollow cylindrical body 13 in which a metering cylinder 14 is rotatably housed. Formed inside this metering cylinder 14 is a conical cavity 15 for receiving one measure of soluble product. The metering cylinder 14 is rotated by an electric motor 75 connected to it via a shaft 16 and a clutch means 17 mounted on and held to the shaft 16 in such a way that it is coupled rotationally to it and axially free. This clutch means 17 couples the motor shaft 17 rotationally to the shaft 16 but permits an axial displacement between these shafts. A spring 77 acts on the clutch means 17 and reacts on an enlarged section of the shaft 16, so keeping the metering cylinder 14 against the end wall 18 of the cylindrical body 13. The rear end 19 of the metering cylinder 14 is provided with a ring gear 20 and the end wall 18 of the cylindrical body 13 is correspondingly provided with an annular series of punctiform projections 21 against which the ring gear 20 abuts. Between the electric motor 75 and the clutch means 17 is a synchronizing disc 22 having suitable shaped profiles 23 around its circumference for tripping microswitches 24 in predetermined angular positions of the disc.

The hollow cylindrical body 13 incorporates a lower opening 25 beneath which is a chute 26 which terminates over an opening 27 at the top of a vertical hollow cylindrical body 28. This hollow cylindrical body 28 defines internally a mixing chamber 29.

Also in the opening 27 of the cylindrical body 28 is a shut-off piston 30 which reciprocates between a position of closure of the opening 27 and a withdrawn position in which the opening 27 is opened.

The reciprocating motion of the shut-off piston 30 is provided by another electric motor 31 which turns a crank 76 carrying a freely rotatable eccentric pin 33; this pin 33 slides in a horizontal guide 34 integral with a rod 35 which slides vertically in fixed bushes 36 and to which the shut-off piston 30 is fixed cantilever-fashion at the upper end. The continuous rotary movement of the motor 31 is converted into rectilinear reciprocating motion of the rod 35 and hence of the piston 30. The motor 31 also turns a synchronizing disc 32 with suitable shaped profiles 37 around its circumference for tripping microswitches 38 in predetermined angular positions of the disc.

Feeding into the lower end of the cylindrical body 28 is a horizontal pipe 39 into which in turn there feeds a vertical pipe 40 in the vicinity of the cylindrical body 28.

The horizontal pipe 39 is for admitting steam into the mixing chamber 29. For this purpose there is an externally accessible water tank 41 whose bottom is connected by a tube 42 to the inlet of a pump 43; the outlet of the pump 43 is connected by a tube 44 to the inlet of a heat exchanger 45 whose outlet is connected to the horizontal pipe 39 by a tube 46 and a check valve 47 into which the tube 46 feeds. The check valve 47 contains a shut-off member 48 which is acted on by a spring 49 so as to close the passage 50 between the tube 46 and the pipe 39.

The vertical pipe 40 is for admitting into the mixing chamber 29 a liquid for mixing with the soluble product to produce the drink. For this purpose the outer part of the machine is provided with another tank 51 for this liquid, from which a tube 52 leads to the vertical pipe 40 through a connector 53. Also feeding into the connector 53 is a tube 54 closed at its free end by a cap 74 shaped in such a way as to form a precisely dimensioned passage between the inside of the tube and the exterior. Inside the vertical pipe 40 is an on-off valve 55 with a plunger shut-off member 56 acted on by a spring 57 so as to close an orifice 58 via which the connector 53 communicates with the pipe 40. The plunger shut-off member 56 is controlled by a transverse arm 59 attached to the rod 35; in particular this plunger shut-off member extends lengthwise well below the outside of the body of the valve 55 and passes through a hole 60 in the arm 59 before terminating beyond the hole 60 with a head 61.

Below the vertical cylindrical body 28, in the bottom of this cylindrical body, is mounted another on-off valve 62 with a mushroom-shaped shut-off member 63 acted on by a spring 64 so as to close the bottom so that there is no communication between the bottom and a discharge orifice 65. The shut-off member 63 extends downwards out of the body of the valve 62 and terminates in a head 66. This shut-off member 63, the plunger shut-off member 56, the arm 59 and the rod 35 all lie in the same vertical plane; in this way shut-off member 63, as well as shut-off member 56, is controlled by the arm 59 which acts on the head 66 of this shut-off member 63.

The discharge orifice 65 communicates with the interior of a connector 67 connected by a tube 68 to an external drinks dispensing head 69. In the cylindrical body 28 a further orifice 70, which communicates with the interior of a connector 71 connected by a tube 72 to the connector 67, opens into the upper part of the mixing chamber 29.

Also illustrated in Fig. 1 are external controls 73 for operating the machine.

The operation of this machine will now be described.

The hopper 12 is first loaded with the soluble product, the tank 41 with water, and the tank 51 with the liquid to be mixed with the soluble product.

Once the machine startup control has been activated, the heat exchanger 45 comes on, i.e. its internal electrical resistor is powered until the working temperature is reached. The metering cylinder 14 is arranged with its cavity 15 facing upwards, so that the cavity receives a measure of soluble product. The shut-off piston 30 is held away from the opening 27. The shut-off members 48, 56 and 63 are in the closed position.

At this point, when the drinks dispensing control is activated, the following takes place.

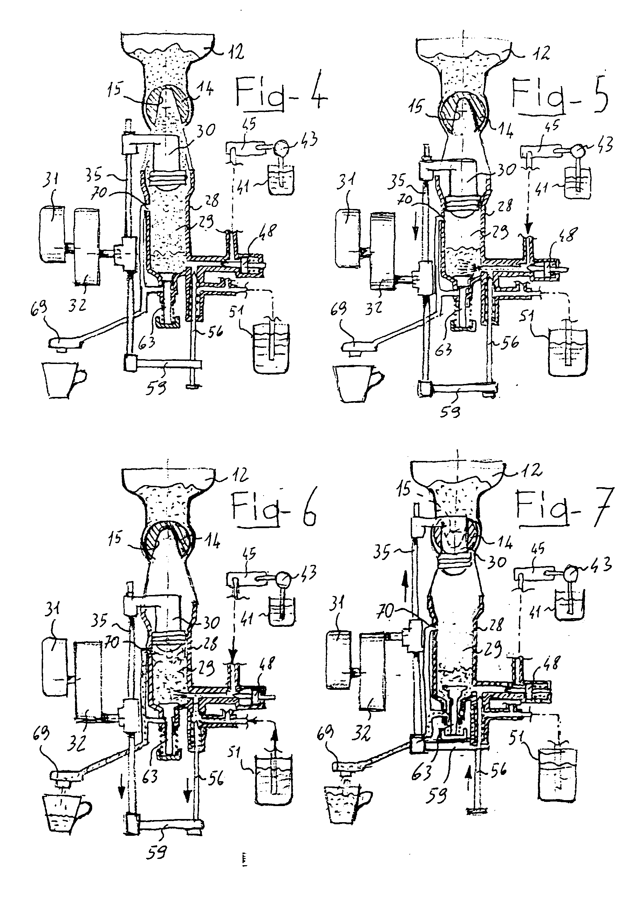

The motor 75 is started and turns the metering cylinder 14 to the position shown in Fig. 4 in which the cavity 15 is upside down and its contents, namely the measure of soluble product, are emptied into the mixing chamber 29. As the metering cylinder 14 is being turned, the interference between the teeth of its ring gear 20 and the punctiform projections 21 on the end wall 18 of the hollow body 13 that contains the metering cylinder, combined with the action of the spring 77 pushing the metering cylinder elastically against this end wall 18, produces a vibration of the metering cylinder in the axial direction which helps to ensure complete emptying of the cavity 15 of the metering cylinder.

Power is now supplied to the motor 31 which, as shown in sequence in Figs. 5 and 6, lowers the rod 35 and consequently the shut-off piston 30 until the latter closes the opening 27 of the vertical hollow cylinder 28. This position of the shut-off piston 30 in the opening 27 corresponds to the lowest position of the rod 35. As the rod 35 moves downwards, the arm 59 of the rod pulls down the plunger shut-off member 56 by its interference with the head 61 of this member in opposition to the action of the spring 57. When the rod 35 is in its lowest position the shut-off member 56 has opened the orifice 58.

The pump 43 is now started and draws water from the tank 41 through the tube 42 and sends it through the tube 44 to the heat exchanger 45 where the water is turned into steam. The steam produced travels along the tube 46 to the valve 47 and the pressure of the steam moves the shut-off member 48 of the valve towards the right to open the passage 50 in opposition to the action of the spring 49. The steam then enters at speed into the mixing chamber 29 through the pipe 39 and this creates a depression in the opened orifice 58, and hence in the connector 53 and in the tubes 52 and 54. In this way the liquid contained inside the tank 51, and external air, flow into the connector 53, the former through the tube 52 and the latter through the precisely dimensioned passage formed by the cap 74 and through the tube 54, and thereafter they flow from the connector 53 through the orifice 58 into the pipe 39 and finally into the mixing chamber 29.

Mixing of the soluble product with the liquid therefore takes place inside the chamber 29. The steam causes the mixture to heat up and, with the air, emulsifies it also. In this way the drink is formed in the mixing chamber 29. As the liquid enters the mixing chamber 29, the level of the drink in the chamber rises and when it reaches the orifice 70 the drink runs out through the connector 71, the tube 72 and the tube 68 to the dispensing head 69 from which it exits to the exterior where it is collected in a container, as shown in Fig. 6.

When the drink dispensing control is turned off, the pump 43 is stopped first, and then the motor 31 is energized so that it lifts the rod back up to its highest position, as shown in Fig. 7. The stopping of the pump 43 interrupts the flow of water into the heat exchanger 45 and hence the generation of steam, causing the pressure to drop in the passage 50 of the check valve 47 and its shut-off member 48 is pushed back by pressure of the spring 49 to the position of closure of the passage 50, preventing the return of fluid into the heat exchanger 45. As the rod 35 rises, the arm 59 also rises and this has two effects: the plunger shut-off member 56 returns to the position in which it closes the orifice 58 under the pressure of the spring 57, being progressively released by the arm 59 until the arm comes away from the head 61 of the shut-off member, and in this closed position the shut-off member prevents fluid from returning to the tank 51; moreover, in the final part of its stroke the arm 59 presses on the head 66 of the mushroom-shaped shut-off member 63 so that it opens the bottom of the cylindrical body 28, causing the drink still contained in the mixing chamber 29 to discharge into the external container through the connector 67, the tube 68 and the dispensing head 69. In addition the lifting of the rod 35 also moves the shut-off piston 30 away from the opening 27. Lastly, the motor 75 is also energized so as to turn the metering cylinder 14 into the initial position with the cavity 15 uppermost.

The machine 10 is thus ready for a new cycle of preparation and dispensing of the drink.

The synchronizing discs 22 and 32 and the associated microswitches 24 and 38 are used to bring about the correct sequence of all the operations described above. In particular the microswitches 24 and 38 are part of an electrical circuit supplying the motors 75 and 31, the resistor of the heat exchanger 45, and the pump 43, and intervene to enable or disable this power in accordance with the operating sequence seen above.

The machine 10 described and illustrated presents many advantages.

In the first place, actuation of the various valve members, that is the piston 30 and the valves 47, 55, 62 which control access of the measure of soluble product to the mixing chamber, the supply of liquid to the mixing chamber, and the emptying of the mixing chamber, is simple. This is because these valve members are actuated by a single rod, namely the rod 35, which is actuated by a single motor, namely the motor 31, by means of elementary means for converting rotary motion to reciprocating motion, namely the crank 76 with the eccentric pin 33 and the guide 34.

This simplicity of actuation of the valve members results in a highly reliable machine.

Also to be pointed out is the low cost of such a drive, requiring as it does a motor that turns in only one direction of rotation and is therefore very cheap, and a small number of elementary kinematic components. The low cost of the drive appreciably reduces the final cost of the machine.

The device for metering out the soluble product is also very simple, cheap and reliable, again requiring a motor that turns in only one direction and an elementary cylinder with a cavity for containing the measure of product.

It has been found to be advantageous to vibrate the metering cylinder 14 in order to empty its cavity 15 completely, and the device used, which comprises the ring gear 20, the punctiform projections 21 and the spring 77 which acts on the metering cylinder, proves to be simple and efficient. In particular, with freeze-dried soluble product which, being highly hygroscopic, tends to form lumps and therefore clog up the cavity of the metering cylinder, vibrating the metering cylinder is found to be an effective way of at least partly loosening these lumps.

The system of controlling the various operations of the machine with the aid of synchronizing discs interacting with microswitches is cheap and effective.

The machine 10 is suitable for preparing and dispensing many types of drinks. For example, the soluble product may be freeze-dried coffee in granules and the liquid to be mixed with it in the mixing chamber may be water, to obtain a drink of creamy coffee. Alternatively the liquid may be milk to produce a cappuccino. Provision may also be made for an operating cycle, activated by a separate selection or by a separate control means, in which the metering device does not operate and therefore the soluble product is not loaded into the mixing chamber; in this case the result is a hot emulsified liquid only, or in the case of milk the result is hot frothy milk.

Variants of and/or additions to that which has been described and illustrated may obviously be used.

For example, one could use a metering device in the form of a reciprocating drawer, with a top opening for loading the measure of soluble product and a bottom opening in a different position for discharging the measure of product into the mixing chamber. The metering device described above and illustrated will, however, be found to be particularly simple and efficient.

As far as the means of driving the valve members is concerned, use may be made of any type of mechanism that converts the rotary movement of the motor into reciprocating movement of the rod. Also, the rod may be replaced by any sliding member which in its movement actuates the valve members in any manner. However, the approach described and illustrated will be found, once again, to be particularly simple and efficient.

The liquid for mixing with the freeze-dried product can be conveyed to the mixing chamber in a different way from that described earlier. For example, instead of using pressurized steam, the liquid can be heated and sent directly into the mixing chamber by the pump and the heat exchanger which in this example are used to generate steam, thereby dispensing with the water tank.

The mixing chamber may also be heated and in this case the liquid may actually reach this chamber cold.

Another idea would be to connect the mixing chamber to the external dispensing device only through the bottom of the chamber itself. In this case the mixing chamber would have to be designed to contain a serving of drink and, once the serving has been prepared in the chamber, the machine's control system would have to stop the flow of liquid into the chamber and cause it to be emptied to the external dispensing means.

The machine's control system may also be more sophisticated than that described above, for instance one possibility would be an electronic microprocessor control circuit controlling the two electric motors with the aid of appropriate sensors. Obviously the expense of a more sophisticated control system would increase costs.

## Claims

1. Automatic machine (10) for preparing drinks from a soluble product and a liquid, comprising means (12-21, 75) for metering out a predetermined quantity of soluble product, means (39-50, 52-58) for supplying the liquid, a mixing chamber (29) connected to the metering means (12-21, 75) and to the supply means (39-50, 52-58), in which the soluble product is mixed with the liquid to produce the drink, the said mixing chamber (29) also being connected to the exterior so as to dispense the drink, and valve members (30, 55, 62) for controlling the access of the measure of soluble product to the mixing chamber (29), the feeding of the liquid to the mixing chamber (29) and the emptying of the mixing chamber (29) to the exterior, the machine being characterized in that it comprises a motor (31) rotating in a single direction of rotation and, for the control of the valve members (30, 55, 62), a control member (35, 59) operated by the motor (31) via means (76, 33, 34) that convert the rotary movement of the motor (31) into reciprocating movement of the control member (35, 59), which control member (35, 59) opens and closes the valve members (30, 55, 62) by its movement.

2. Machine according to Claim 1, in which the said valve members comprise a first shut-off member (30) able to close the connection between the metering means (12-21, 75) and the mixing chamber (29), a second shut-off member (56) able to close the passage of the liquid into the mixing chamber (29), and a third shut-off member (63) able to close a passage for the emptying of the mixing chamber (29), the said control member (35, 59) closing the first shut-off member (30) and opening the second shut-off member (56) on its outward stroke, and opening the first shut-off member (30), closing the second shut-off member (56) and opening the third shut-off member (63) on its return stroke.

3. Machine according to Claim 1 or 2, in which the said control member comprises an axially guided rod (35), one end of which is rigidly connected to the first shut-off member (30) while from the other end of the rod (35) there extends an integral arm (59) able to act on the second (56) and third (63) shut-off members.

4. Machine according to Claim 3, in which the movement conversion means comprise a crank (76) coupled in rotation to the motor (31) and carrying an eccentric pin (33) which engages in a rectilinear guide (34) integral with the rod (35).

5. Machine according to any one of the preceding claims, in which the upper end of the mixing chamber (29) is in communication with the exterior in order to dispense the drink.

6. Machine according to any one of the preceding claims, in which the metering means comprise a hopper (12) whose bottom communicates with a hollow body (13) connected to the mixing chamber (29) and in which there is rotatably housed a metering cylinder (14) having a conical cavity (15) for receiving one measure of soluble product, the metering cylinder (14) being rotated between a position in which its cavity (15) receives the soluble product from the hopper (12) and a position in which the soluble product is discharged from the cavity (15) into the mixing chamber (29).

7. Machine according to Claim 6, in which the metering cylinder (14) is driven by another motor (75) rotating in only one direction of rotation.

8. Machine according to Claim 6 or 7, in which the metering cylinder (14) is axially mobile and is pushed elastically against the end wall (18) of the hollow body (13) in such a way that the rear end (19) of the metering cylinder (14) is in contact with the end wall (18) of the hollow body (13), and in which the said rear end (19) and the said end wall (18) have respective protuberances (20, 21) in mutual interference which, as the metering cylinder (14) rotates, cause the latter to vibrate.

9. Machine according to Claim 8, in which the said rear end (19) of the metering cylinder (14) comprises a ring gear (20) and the end wall (18) of the hollow body (13) comprises an annular series of punctiform projections (21), the teeth of the said ring gear (20) and the said punctiform projections (21) constituting the said protuberances.

10. Machine according to any one of the preceding claims, comprising steam generating means (41-45) communicating with a pipe (39) for the admission of steam into the mixing chamber (29), and comprising a liquid feed pipe (40) which contains one (55) of the said valve members and which feeds into the steam admission pipe (39) in such a way that the flow of steam causes aspiration of liquid into the mixing chamber (29) and its emulsification.

11. Machine according to Claim 7, in which the motor (75) for driving the metering cylinder (14) and the motor (31) for driving the valve members (30, 55, 62) also move respective synchronizing discs (22, 32) having shaped profiles (23, 37) which trip microswitches (24, 38) controlling the power supplied to the motors (31, 75) in a synchronized manner.

12. Machine according to any one of the preceding claims, comprising an externally accessible tank (51) designed to contain the liquid and connected to the feed means(39-50, 52-58).
